# EUROPEAN PATENT APPLICATION

(11) **EP 4 625 161 A1**
(43) Date of publication of application: **01.10.2025**
(21) Application number: 23893796.5
(22) Date of filing: 20.11.2023
(51) Int. Cl.: G06F 9/451

(54) **MEDIA CONTENT DISPLAY METHOD AND APPARATUS, AND DEVICE, READABLE STORAGE MEDIUM AND PRODUCT**

(30) Priority: 22.11.2022 CN 202211469412
(71) Applicant: Beijing Zitiao Network Technology Co., Ltd., Beijing 100190 (CN)
(72) Inventor: WAN, Shiqi, Beijing 100028 (CN); SHU, Siqi, Beijing 100028 (CN)
(74) Representative: Grünecker Patent- und Rechtsanwälte PartG mbB
(86) International application number: PCT/CN2023/132726
(87) International publication number: WO 2024/109706

(57) **Abstract**

Embodiments of the disclosure provide a method, an apparatus, a device, a readable storage medium, and a product for displaying media content, and the method includes: displaying, within a session interface, in a predetermined first display state, at least one first media content sent by a second user; in response to a media content obtaining request triggered by a first user for the first media content, determining at least one second media content obtained by the first user; and in response to sending of the at least one second media content, switching a display state of at least one of the first media content satisfying a predetermined condition, to a predetermined second display state.

## Description

The present application claims priority to Chinese Patent Application No. 202211469412.0, filed on November 22, 2022, and entitled "METHOD, APPARATUS, DEVICE, READABLE STORAGE MEDIUM, AND PRODUCT FOR DISPLAYING MEDIA CONTENT", the entirety of which is incorporated herein by reference.

### FIELD

Embodiments of the present disclosure relate to the technical field of interface interaction, in particular to a method, an apparatus, a device, a readable storage medium, and a product for displaying media content.

### BACKGROUND

Various existing application software provides an instant messaging function to a user. Based on the instant messaging function of the application software, a user may perform real-time interaction based on voice, text, and pictures with friends. However, the use of the aforementioned method for information interaction often results in relatively monotonous interactive content, which fails to meet interaction needs of a user.

### SUMMARY

The embodiments of the present disclosure provide a method, an apparatus, a device, a readable storage medium, and a product for displaying media content, to solve the technical problem of the existing instant messaging having monotonous interactive content.

In a first aspect, the embodiments of the present disclosure provide a method of displaying media content, comprising:
displaying, within a session interface, in a predetermined first display state, at least one first media content sent by a second user;
in response to a media content obtaining request triggered by a first user for the first media content, determining at least one second media content obtained by the first user; and
in response to sending of the at least one second media content, switching a display state of at least one of the first media content satisfying a predetermined condition, to a predetermined second display state.

In a second aspect, the embodiments of the present disclosure provide an apparatus for displaying media content, comprising:
a displaying module configured to display, within a session interface, at least one first media content sent by a second user in a predetermined first display state;
a determining module configured to, in response to a media content obtaining request triggered by a first user for the first media content, determine at least one second media content obtained by the first user; and
a switching module configured to, in response to sending of the at least one second media content, switch a display state of the at least one of the first media content satisfying a predetermined condition, to a predetermined second display state.

In a third aspect, the embodiments of the present disclosure provide an electronic device, comprising: a processor and a memory;
the memory storing computer-executable instructions;
the processor executing the computer-executable instructions stored in the memory, causing the processor to perform the method of displaying media content according to the first aspect and various possible designs of the first aspect.

In a fourth aspect, the embodiments of the present disclosure provide a computer-readable storage medium storing computer-executable instructions, the computer-executable instructions, when executed by the processor, implementing the method of displaying media content according to the first aspect and various possible designs of the first aspect.

In a fifth aspect, the embodiments of the present disclosure provide a computer program product comprising a computer program, the computer program, when executed by a processor, implementing the method of displaying media content according to the first aspect and various possible designs of the first aspect.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
FIG. 1 is a schematic flowchart of a method of displaying media content according to the embodiments of the present disclosure;
FIG. 2 is a schematic diagram of a display interface according to the embodiments of the present disclosure;
FIG. 3 is a schematic diagram of interface interaction according to the embodiments of the present disclosure;
FIG. 4 is a schematic diagram of another interface interaction according to the embodiments of the present disclosure;
FIG. 5 is a schematic flowchart of a method of displaying media content according to another embodiment of the present disclosure;
FIG. 6 is a schematic diagram of another interface interaction according to the embodiments of the present disclosure;
FIG. 7 is a schematic diagram of another display interface according to the embodiments of the present disclosure;
FIG. 8 is a schematic flowchart of a method of displaying media content according to another embodiment of the present disclosure;
FIG. 9 is a schematic diagram of another interface interaction according to the embodiments of the present disclosure;
FIG. 10 is a schematic structural diagram of an apparatus for displaying media content according to the embodiments of the present disclosure; and
FIG. 11 is a schematic structural diagram of an electronic device according to the embodiments of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. It is clear that the embodiments described are part of the present disclosure and not all embodiments. All other embodiments obtained by those skilled in the art based on the embodiments of the present disclosure without creative efforts shall fall within the scope of the present disclosure.

It can be understood that, before the technical solutions disclosed in the embodiments of the present disclosure are used, the types of personal information, the usage scope, the usage scenario and the like related to the present disclosure shall be notified to the user in an appropriate manner according to the relevant laws and regulations and the authorization of the user shall be obtained.

For example, in response to receiving an active request from a user, prompt information is sent to the user to explicitly prompt the user that the requested operation will need to acquire and use the personal information of the user. Therefore, the user can autonomously select whether to provide personal information to software or hardware such as an electronic device, an application, a server, a storage medium, or the like executing the operation of the technical solution of the present disclosure according to the prompt information.

As an optional but non-limiting implementation, in response to receiving the active request from the user, the manner of sending the prompt information to the user may be, for example, a pop-up window, and the prompt information may be presented in a text manner in the pop-up window. In addition, the pop-up window may further carry a selecting control for the user to select "agree" or "disagree" to provide personal information to the electronic device.

It may be understood that the foregoing process of notification and obtaining a user authorization is merely illustrative, and does not constitute a limitation on implementations of the present disclosure, and other manners of meeting related laws and regulations may also be applied to implementations of the present disclosure.

To solve the existing the technical problem of the existing instant messaging having monotonous interactive content, the present disclosure provides a method, an apparatus, a device, a readable storage medium, and a product for displaying media content.

It should be noted that the method, apparatus, device, readable storage medium, and product for displaying media content provided by the present disclosure may be applied to any instant messaging scenario.

Existing instant messaging functions generally only support instant messaging operations based on text, images, and voice content. Therefore, the interactive content of the instant messaging function is relatively monotonous, and the display effect of the session interface corresponding to the instant messaging function is relatively monotonous.

In order to enrich the interactive content of the instant messaging function and optimize the display effect in the session interface, different display states may be set for the media content in the session interface. The display state may include a blurred state and a clear state. Therefore, a switching of the media content may be implemented based on different display states. For example, after a second user sends at least one first media content, the at least one first media content may be displayed in a blurred state. When it is detected that a first user generates and sends at least one second media content based on the at least one first media content, the at least one first media content may be switched from the blurred state to the clear state.

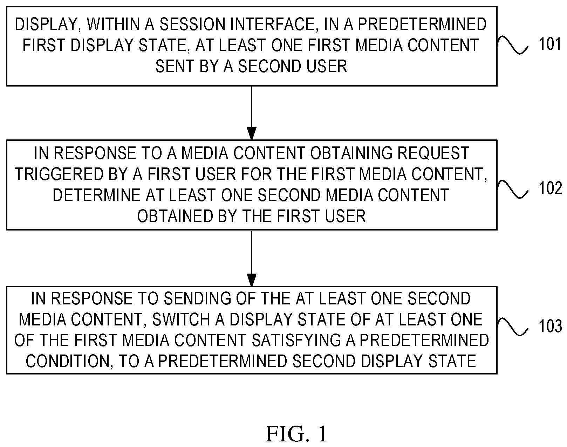

FIG. 1 is a schematic flowchart of a method of displaying media content according to the embodiments of the present disclosure.

Step 101: At least one first media content sent by a second user is displayed in a predetermined first display state within a session interface.

The executing entity of this embodiment is an apparatus for displaying media content, and the apparatus for displaying media content may be coupled to a terminal device of a first user. Therefore, the display of the media content can be performed based on triggering by the first user.

In this embodiment, the first user and the second user can perform information interaction through an instant messaging function provided in an application. In an instant messaging process, interactive content may be displayed on a session interface. The second user may send a first media content to the first user according to an actual demand, where the second user may be a user having a predetermined association with the first user. For example, the second user may be a friend who mutually follows each other with the first user, or the second user may be a user who has a unilateral following relationship with the first user, or the second user may be a user whose interaction with the first user satisfy a certain predetermined condition.

Correspondingly, after the at least one first media content sent by the second user is obtained, the at least one first media content sent by the second user may be displayed in a predetermined first display state within the session interface.

The first display state may be specifically a fuzzy state, which may be obtained by performing Gaussian blurring or mosaic blurring on the at least one first media content, after the at least one first media content is obtained. In the first display state, the first user cannot view the clear first media content.

Step 102: In response to a media content obtaining request triggered by a first user for the first media content, at least one second media content obtained by the first user is determined.

In this implementation, after obtaining the at least one first media content, the first user may generate the at least one second media content based on the at least one first media content.

Alternatively, the at least one second media content obtained by the first user may be determined in response to the media content obtaining request triggered by the first user for the first media content.

As an implementation, a predetermined replying-by-capturing control may be displayed on the at least one first media content, and in response to triggering by the first user on the replying-by-capturing control, the media content obtaining request triggered by the first user for the first media content is obtained. Alternatively, the media content obtaining control may be predetermined in the session interface, and the media content obtaining request triggered by the first user for the first media content is obtained in response to triggering by the first user on the media content obtaining control.

Step 103: In response to sending of the at least one second media content, a display state of at least one of the first media content satisfying a predetermined condition is switched to a predetermined second display state.

In this embodiment, after determining the at least one second media content, in response to the sending of the at least one second media content, the display state of at least one of the first media content satisfying the predetermined condition may be switched to the predetermined second display state based on the at least one second media content.

The second display state may be a clear state. Therefore, after the display state of the first media content is switched to the second display state, the first user can view the clear first media content.

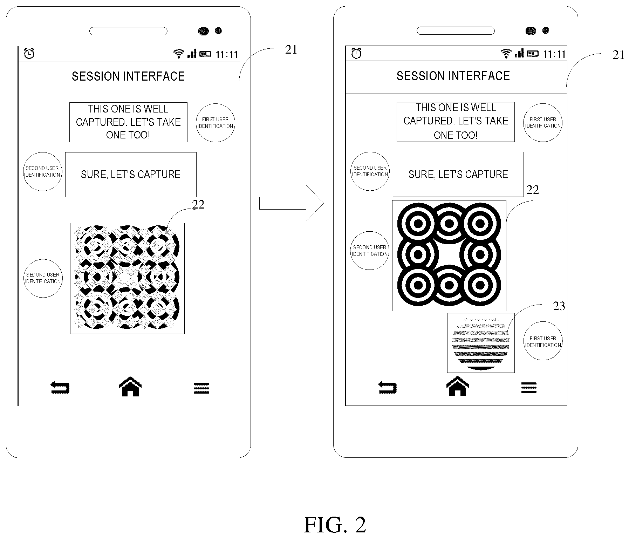

FIG. 2 is a schematic diagram of a display interface according to the embodiments of the present disclosure. As shown in FIG. 2, at least one first media content 22 may be displayed on a session interface 21, where each of the first media content 22 is displayed in a first display state. When it is detected that the first user generates and sends at least one second media content 23 based on the at least one first media content 22, a display state of the first media content 22 satisfying a predetermined condition may be switched from the first display state to a second display state.

According to the method of displaying media content provided in this embodiment, at least one first media content sent by the second user having a predetermined association with the first user is displayed in the predetermined first display state within the session interface, and when the sending of the at least one second media content generated by the first user based on the at least one first media content is detected, the display state of the at least one of the first media content satisfying the predetermined condition is switched to the predetermined second display state, thereby enriching the interactive content within the session interface. In addition, by switching the display state of the first media content, the display effect within the session interface can be further enriched.

Alternatively, on the basis of any of the foregoing embodiments, the second media content comprises an image content. Step 102 comprises:
in response to triggering by the first user on a predetermined media content obtaining control, obtaining at least one media content generated by the first user.

The media content obtaining control comprises at least one of: a media content capturing control, a media content uploading control, or a media content selecting control.

In this embodiment, the second media content may comprise a media content. A media content obtaining control may be preset in the session interface, where the media content obtaining control may be displayed in a predetermined display area in the session interface, or may be displayed on each of the first media content.

In response to the triggering by the first user on the media content obtaining control, the at least one media content generated by the first user may be obtained.

It should be noted that the media content obtaining control comprises at least one of: a media content capturing control, a media content uploading control, or a media content selecting control. Alternatively, the first user may trigger the media content capturing control to implement real-time collection of the media content. Alternatively, the first user may further select, by triggering on the media content uploading control, a pre-stored media content in a terminal device as the second media content. Alternatively, the first user may further select the second media content from historically posted or historically interacted media content associated with the current application by triggering on the media content selecting control. The media content may include at least one of a picture, a video, or an audio, and the media content may further include text information.

Further, on the basis of any of the foregoing embodiments, in response to the triggering by the first user on the predetermined media content obtaining control, obtaining the at least one media content generated by the first user comprises:
in response to triggering by the first user on the media content capturing control, redirecting to a predetermined media content capturing interface; and
determining at least one media content generated by the first user on the media content capturing interface, as the at least one second media content.

In this embodiment, the media content obtaining control comprises a media content capturing control. The first user may trigger the media capturing control to implement real-time collection of the media content. In response to the triggering by the first user on the media content capturing control, a predetermined media content capturing interface may be redirected to. The first user may implement a photographing of a media content within a predetermined media content capturing interface. Therefore, the at least one media content generated by the first user on the media content capturing interface may be determined as the at least one second media content.

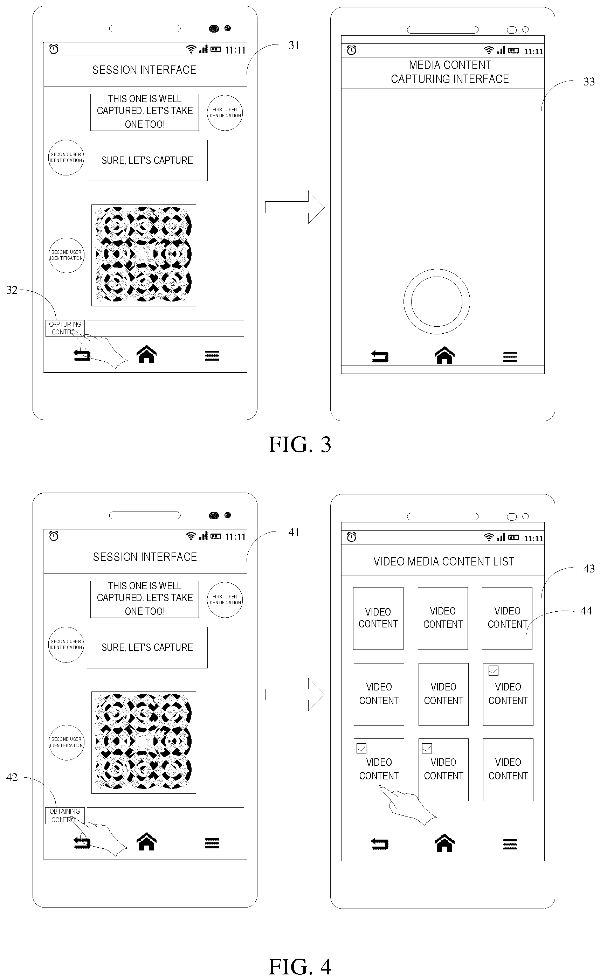

FIG. 3 is a schematic diagram of interface interaction according to the embodiments of the present disclosure. As shown in FIG. 3, a media content capturing control 32 may be set on the session interface 31. In response to the triggering by the first user on the media content capturing control 32, a predetermined media content capturing interface 33 may be redirected to.

According to the method of displaying media content provided in this embodiment, the at least one media content generated by the first user is obtained by the triggering by the first user on the predetermined media content obtaining control, so that switching of media content with the second user can be achieved based on the media content. Interactive content of an instant messaging function is enriched.

Alternatively, on the basis of any of the foregoing embodiments, the second media content comprises a media content satisfying a predetermined display condition. Step 102 comprises:
in response to triggering by the first user on a predetermined media content obtaining control, displaying a media content list associated with a current application, the media content list including a plurality of media contents satisfying a predetermined display condition; and
in response to selecting by the first user on the media content list, determining a media content selected by the first user, as the at least one second media content.

In this embodiment, the second media content comprises a media content satisfying the predetermined display condition. A media content obtaining control may be preset in the session interface, where the media content obtaining control may be displayed in a predetermined display area in the session interface, or may be displayed on each of the first media content.

In response to triggering by the first user on the predetermined media content obtaining control, a media content list associated with a current application may be displayed. The media content list includes a plurality of media contents satisfying the predetermined display condition.

The media content satisfying the predetermined display condition comprises at least one of: a media content on which the first user has triggered a predetermined interaction, a media content historically posted by the first user, or a media content historically generated but unposted by the first user.

The first user may select a media content from the media content list according to an actual demand. In response to the selecting by the first user on the media content list, the media content selected by the first user may be determined as the at least one second media content. Alternatively, the selecting on the media content may be implemented in any method such as single click, double click, long press, drag, or the like on the media content.

FIG. 4 is a schematic diagram of another interface interaction according to the embodiments of the present disclosure. As shown in FIG. 4, the media content may comprise video content. A media content obtaining control 42 may be preset in a session interface 41. In response to triggering by the first user on the media content obtaining control 42, a video content list 43 associated with the current application may be displayed, where the video content list 43 includes a plurality of video contents 44 satisfying a predetermined display condition. The first user may perform selecting of the second media content on the video content list 43 according to an actual demand.

In the method of displaying media content provided in this embodiment, the media content list associated with the current application is displayed for selection by the first user in response to the triggering by the first user on the predetermined media content obtaining control. Thereby, the switching of the media content with the second user can be achieved based on the media content. The interactive content of the instant messaging function is further enriched, and the display effect in the session interface can be improved.

Alternatively, on the basis of any of the foregoing embodiments, step 102 comprises:
in response to triggering by the first user on a predetermined media content obtaining control, displaying a predetermined upload selecting list, wherein the upload selecting list includes a selecting control; and
in response to triggering by the first user on the selecting control, determining at least one image content and/or at least one video content generated by the first user, as the at least one second media content.

In this embodiment, the second media content may include an image content and/or a video content. A media content obtaining control may be preset in the session interface, where the media content obtaining control may be displayed in a predetermined display area in the session interface, or may be displayed on each of the first media content.

In response to the triggering by the first user on the media content obtaining control, the predetermined upload selecting list may be displayed, where the upload selecting list includes a selecting control. In response to the triggering by the first user on the selecting control, the at least one image content and/or the at least one video content generated by the first user may be determined as the at least one second media content.

Alternatively, on the basis of any of the foregoing embodiments, the selecting control comprises a first selecting control and a second selecting control.

In response to the triggering by the first user on the selecting control, determining the at least one image content and/or the at least one video content generated by the first user, as the at least one second media content comprises:
in response to triggering by the first user on the first selecting control, determining the at least one image content generated by the first user, as the at least one second media content; and
in response to triggering by the first user on the second selecting control, determining the at least one video content generated by the first user, as the at least one second media content.

In this embodiment, the selecting control may comprise a first selecting control and a second selecting control. In response to the triggering by the first user on the first selecting control, an image content may be generated by a manner such as capturing and/or uploading and/or selecting, and the at least one image content generated by the first user is determined as the at least one second media content.

Alternatively, in response to the triggering by the first user on the second selecting control, a predetermined video content list may be displayed, and in response to selecting by the first user on the video content list, the at least one video content generated by the first user is determined as the at least one second media content. Alternatively, in response to the triggering by the first user on the second selecting control, a media content generating interface may be redirected to, and in response to the video content generated by the first user in the media content generating interface, the at least one second media content is obtained.

According to the method of displaying media content provided in this embodiment, the predetermined upload selecting list is displayed in response to the triggering by the first user on the predetermined media content obtaining control, so that the first user can select and send the image content and/or the video content by triggering the selecting control in the upload selecting list. The determination of the second media content is convenient and flexible, and the interaction efficiency is improved.

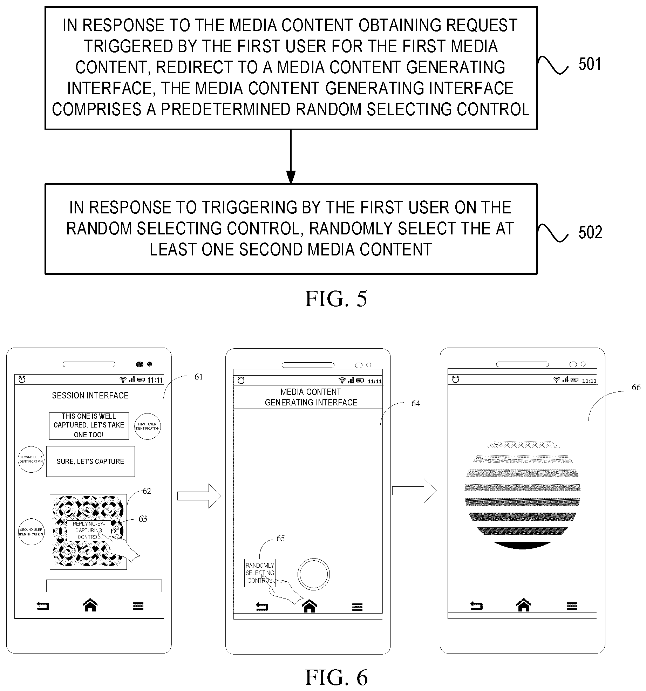

FIG. 5 is a schematic flowchart of a method of displaying media content according to another embodiment of the present disclosure. On the basis of any of the above embodiments, as shown in FIG. 5, step 102 comprises:

Step 501: In response to the media content obtaining request triggered by the first user for the first media content, a media content generating interface is redirected to. The media content generating interface comprises a predetermined random selecting control.

Step 505: In response to triggering by the first user on the random selecting control, the at least one second media content is randomly selected.

In this embodiment, in order to further enrich the interactive content within the session interface, the generation of the second media content may also be performed randomly.

Alternatively, in response to the media content obtaining request triggered by the first user for the first media content, a media content generating interface is redirected to. The media content generating interface comprises a predetermined random selecting control. In response to triggering by the first user on the random selecting control, the at least one second media content is randomly selected. The at least one second media content may be randomly selected from the image content and the video content pre-stored in the terminal device of the first user, as well as from the image content and the video content that have been historically posted or historically interacted with in association with the current application.

Further, after randomly selecting the at least one second media content based on the triggering by the first user on the random selecting control, the at least one second media content may be displayed within the display interface. The first user may directly perform a sending based on the at least one second media content. Alternatively, if the first user is unsatisfied with the currently selected at least one second media content, the selecting of the second media content may be performed again by triggering the random selecting control again.

FIG. 6 is a schematic diagram of another interface interaction according to the embodiments of the present disclosure. As shown in FIG. 6, at least one first media content 62 may be displayed in a session interface 61, and a predetermined replying-by-capturing control 63 may be set on the first media content 62. In response to the first user triggering a media content obtaining request by triggering the replying-by-capturing control 63, a media content generating interface 64 is redirected to, where a random selecting control 65 is set in the media content generating interface 64. In response to triggering by the first user on the random selecting control 65, at least one second media content 66 may be randomly selected. For example, the random selection may be performed within a range of user-specified album or a media content list in the current application.

Further, on the basis of any of the above embodiments, step 502 comprises:
in response to the triggering by the first user on the random selecting control, randomly selecting at least one pre-stored media content, and determining the at least one pre-stored media content as the at least one second media content; and/or
step 502 comprising:
   in response to the triggering by the first user on the random selecting control, randomly selecting at least one media content satisfying a predetermined display condition, and determining the at least one media content satisfying the predetermined display condition, as the at least one second media content.

In this embodiment, in response to triggering by the first user on the random selecting control, at least one pre-stored media content may be randomly selected, and the at least one pre-stored media content is determined as the at least one second media content. The pre-stored media content may be a media content pre-stored in a terminal device of the first user specified by the first user.

Alternatively, in response to the triggering by the first user on the random selecting control, at least one media content satisfying a predetermined display condition is randomly selected, and the at least one media content satisfying the predetermined display condition is determined as the at least one second media content.

The media content satisfying the predetermined display condition comprises at least one of: all media contents on which the first user has triggered a predetermined interaction, a media content historically posted by the first user, or a media content historically generated but unposted by the first user (for example, a draft content stored in an application).

The media content may include at least one of: a picture, a video, or an audio, and the media content may further include text information.

According to the method of displaying media content provided in this embodiment, in response to the media content obtaining request triggered by the first user for the first media content, a media content generating interface which comprises a predetermined random selecting control is redirected to, thereby the first user can quickly obtain the second media content through the random selecting control. The step of generation of the second media content is simplified, thereby the efficiency of interaction can be improved on the basis of enriching the interactive content in the instant messaging function.

Further, on the basis of any of the above embodiments, step 502 comprises:
in response to the triggering by the first user on the random selecting control, generating a dynamic display content according to a display content associated with a plurality of predetermined second media contents, the display content corresponding to a predetermined play duration; and
playing the dynamic display content, and displaying the randomly selected at least one second media content when the dynamic display content completes playing.

In this embodiment, in response to the triggering by the first user on the random selecting control, at least one second media content may be selected from pre-stored image content and/or video content. The at least one second media content may therefore not be displayed in real-time. Therefore, in the selection process, the dynamic display content may be generated according to the display content associated with the plurality of predetermined second media contents, and when the dynamic display content completes playing, the randomly selected at least one second media content is displayed.

Alternatively, the display content corresponds to a predetermined play duration. For example, the dynamic display content may be a dynamic video content of one second. In the dynamic display content, the display content associated with each of the second media contents may be switched according to a predetermined time interval. In the switching process, a vibration effect may also be added.

Alternatively, in order to further optimize the display effect of the dynamic display content, in the process of playing the dynamic display content, the display area of the dynamic display content may be controlled to gradually decrease, and randomly selected at least one second media content is displayed in full screen when the dynamic display content completes playing.

According to the method of displaying media content provided in this embodiment, before the second media content is randomly selected, the display content which is generated according to the display content associated with the plurality of predetermined second media contents has been played, thereby the display effect in the generation process of the second media content can be optimized.

Further, on the basis of any of the above embodiments, step 103 comprises:
in response to the sending of the at least one second media content, determining a time period escaped after the at least one first media content is sent; and
switching a display state of the at least one of the first media content having the time period less than a predetermined duration threshold, to a predetermined second display state, according to the at least one second media content.

In this embodiment, the predetermined condition may comprise the display state of the at least one first medium content, within the predetermined duration threshold, can be switched.

Correspondingly, after the sending of the at least one second media content, the time period escaped after the at least one first media content is sent may be determined. The time period is compared with the predetermined duration threshold. The duration threshold may be set by a user according to an actual demand, which is not limited in the present disclosure. For example, the duration threshold may be 24 hours.

After sending the at least one second media content, for each of the first media content, the display state of the at least one of the first media content having the time period less than the predetermined duration threshold may be switched to the predetermined second display state. Therefore, after the first user sends the second media content, the first user can view the clear first media content whose time period does not exceed the duration threshold.

According to the method of displaying media content provided in this embodiment, by presetting the duration threshold, the switching on the display state of the first media content is implemented within the duration threshold, so that the display state of the first media content is more consistent with the user demand.

Further, on the basis of any of the above embodiments, after step 101, the method further comprises:
determining a time period escaped after the at least one first media content; and
in accordance with a determination, for each of the first media content, that the time period of the first media content exceeds a predetermined duration threshold, switching the display state of the first media content to a predetermined third display state;
wherein the third display state indicates that the display state of the first media content is unable to be switched to the predetermined second display state.

In this embodiment, in order to accurately switch the display state of the first media content, the duration threshold may be predetermined. After obtaining the at least one first media content, the time period escaped after the at least one first media content may be determined. For each of the first media content, whether the time period of the first media content exceeds the predetermined duration threshold may be determined. If yes, the display state of the first media content may be switched to the predetermined third display state.

The third display state indicates that the display state of the first media content is unable to be switched to the predetermined second display state. That is, when the first media content is in the third display state, the first user is unable to view the clear first media content. Alternatively, when the first media content is in the third display state, prompt information corresponding to the third display state may be displayed at a location associated with the first media content. The prompt information may be: the message is expired.

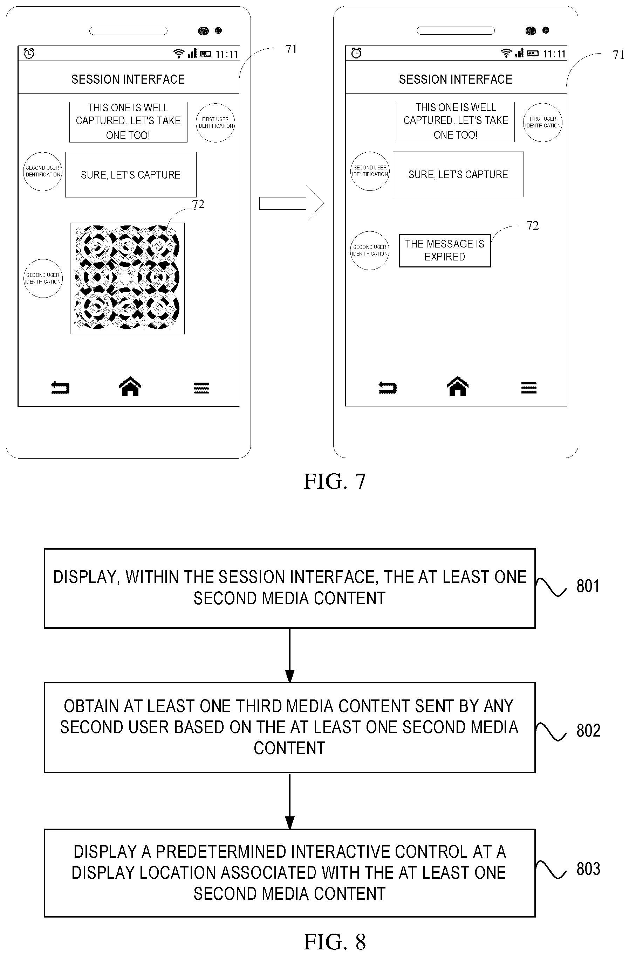

FIG. 7 is a schematic diagram of another display interface according to the embodiments of the present disclosure. As shown in FIG. 7, at least one first media content 72 may be displayed in a session interface 71, where each of the first media content 72 is displayed in a first display state. When it is detected that the time period escaped after the first media content 72 exceeds the predetermined duration threshold, the display state of the first media content 72 may be switched to the third display state.

According to the method of displaying media content provided by the embodiments of the present disclosure, the duration threshold is predetermined, and when the time period of the first media content does not exceed the duration threshold (that is, the predetermined condition), the first display state can be switched to the second display state, so that the timeliness of switching of the display state of the first media content can be ensured, that is, the media content capable of state switching is related to the duration threshold. Therefore, the interactive content in the instant messaging function is enriched, and the display effect in the session interface can be improved.

Further, on the basis of any of the above embodiments, step 103 comprises:
switching, within the session interface, the display state of n first media contents of the at least one first media content having the first display state and satisfying a predetermined switching condition, to the predetermined second display state, according to the at least one second media content, where n is greater than 1.

In this embodiment, after the sending of the at least one second media content is completed, the display state of n first media contents of the at least one first media content having the first display state and satisfying a predetermined switching condition, within the session interface, is switched to the predetermined second display state, according to the at least one second media content, where n is greater than 1. Thus, the switching of the display states of the plurality of first media contents can be achieved based on the at least one second media content.

Alternatively, the n is associated with a number of the second media contents.

Herein, n may be the same as the number of the second media contents. Therefore, the display state of the matched first media content can be switched according to the number of the second media contents. Alternatively, n may also be less than the number of second media contents. The number of n may be set by the first user according to actual demands, which is not limited in the present disclosure.

According to the method of displaying media content provided in this embodiment, the display state of n first media contents of the at least one first media content having the first display state and satisfying a predetermined switching condition, within the session interface, is switched to the predetermined second display state, according to the at least one second media content, thereby the switching of the display state of more first media content can be achieved based on the at least one second media content.

FIG. 8 is a schematic flowchart of a method of displaying media content according to another embodiment of the present disclosure. On the basis of any of the above embodiments, after step 103, the method further comprises:
step 801: displaying, within the session interface, the at least one second media content;
step 802: obtaining at least one third media content sent by any second user based on the at least one second media content; and
step 803: displaying a predetermined interactive control at a display location associated with the at least one second media content, the interactive control representing a number of second users having sent the at least one third media content based on the at least one second media content.

In this embodiment, after the first user generates the at least one second media content based on the at least one first media content and sends the at least one second media content, at least one second media content may be displayed within the session interface. Alternatively, the at least one second media content may be displayed in a first display state within a session interface of the second user. The second user may generate at least one third media content based on the at least one second media content, to switch the display state of the at least one second media content.

Further, at least one third media content sent by any second user based on the at least one second media content may be obtained. In order to enable the first user to know the second user that is currently sending the at least one third media content based on the at least one second media content, the predetermined interactive control at the display location associated with the at least one second media content is displayed. The interactive control represents a number of second users having sent the at least one third media content based on the at least one second media content.

For example, the switching control may display the text information according to the number of the second users sending the at least one third media content: N users have switched.

Further, on the basis of any of the above embodiments, after step 803, the method further comprises:
in response to triggering by the first user on the interactive control, displaying a second user list, the second user list including identification information of all of the second users having sent the third media content.

In this embodiment, the first user may trigger the interactive control according to an actual demand. In response to the triggering, the second user list may be displayed, where the second user list includes the identification information of all of the second users having sent the third media content.

Alternatively, the display location associated with the identification information of each of the second users in the second user list may further display the third media content sent by the second user.

Alternatively, in response to the triggering by the first user on the identification information of any of the second users, the third media content sent by the second user may be redirected to.

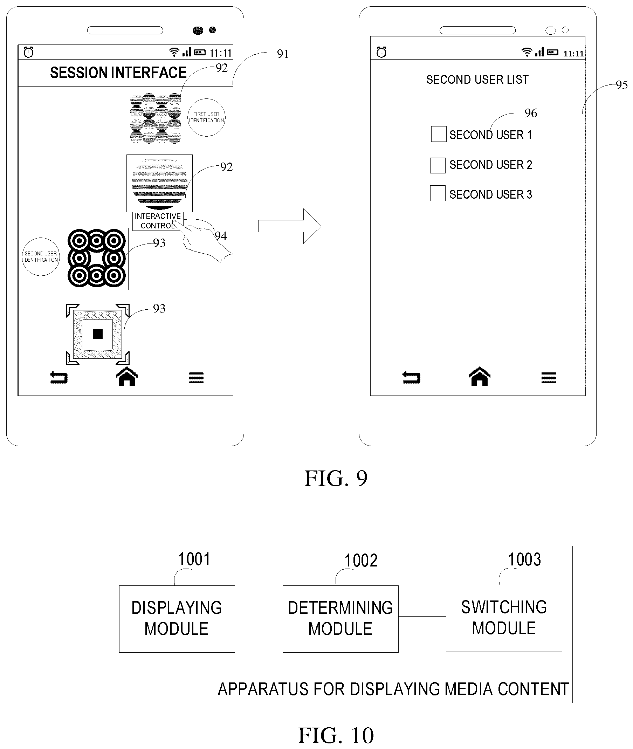

FIG. 9 is a schematic diagram of another interface interaction according to the embodiments of the present disclosure. As shown in FIG. 9, a second media content 92 and a third media content 93 sent based on the second media content 92 are respectively displayed in a session interface 91. An interactive control 94 is further displayed in the display area associated with the second media content 93. A number of second users currently sending the at least one third media content 93 based on the at least one second media content 92 may be displayed on the interactive control 94. In response to the triggering by the first user on the interactive control 94, the second user list 95 may be displayed, where the second user list 95 includes identification information 96 of all of the second users having sent the third media content.

According to the method of displaying media content provided in this embodiment, the second media content is displayed with the session interface, the third media content sent based on the second media content is obtained, and the predetermined interactive control is displayed. Thus, the first user can know, based on the interactive control, the second user that has currently sent at least one third media content based on at least one second media content. In addition, the display content within the session interface can be further enriched.

Further, on the basis of any of the above embodiments, before step 101, the method further comprises:
in response to a media content obtaining request triggered by a first user, determining at least one fourth media content obtained by the first user;
sending the at least one fourth media content to the session interface, to enable the second user to send at least one target first media content based on the at least one fourth media content; and
wherein in response to the sending of the at least one second media content, switching the display state of the at least one of the first media content satisfying the predetermined condition to the predetermined second display state comprises:
   in response to the sending of the at least one second media content, switching a display state of the target first media content in a first display state, to the predetermined second display state, wherein the second media content is an interactive content generated based on the target first media content. That is, the second media content is the content replied by capturing for the target first media content.

In this embodiment, the at least one first media content sent by the second user may be generated based on at least one fourth media content pre-sent by the first user.

Alternatively, in response to the media content obtaining request triggered by the first user, the at least one fourth media content obtained by the first user may be determined. The at least one fourth media content comprises an image content and/or a video content, and the fourth media content may be generated by the first user capturing and/or uploading and/or selecting in real time.

After obtaining the at least one fourth media content, the at least one fourth media content may be sent to the session interface. The at least one fourth media content may be displayed in the first display state within the session interface. Therefore, after the second user views the at least one fourth media content within the session interface, at least one target first media content may be generated based on the at least one fourth media content, and the at least one target first media content is sent to the session interface. Therefore, the second user may switch the display state of the at least one fourth media content based on the at least one target first media content.

Further, at the first user side, the at least one target first media content generated by the second user based on the at least one fourth media content may be displayed in the first display state within the session interface. After the first user sends the at least one second media content based on the target first media content, the display state of the target first media content in the first display state may be switched to the predetermined second display state. That is, after the first user receives the target first media content replied by capturing from the second user, the first user can only see the blurred image of the target first media content, and only after a replying-by-capturing content (the second media content) is sent based on the target first media content, the first user can see the clear image of the target first media content that is previously replied by capturing from the second user. Similarly, after the second user receives the second media content, the second user can only see the blurred image, and needs to continue to generate at least one replying-by-capturing content according to the second media content to view the clear image of the second media content. An infinite switching based on media content can be achieved.

According to the method of displaying media content provided in this embodiment, before obtaining the at least one first media content sent by the second user, the at least one fourth media content generated by the first user is obtained, and the at least one fourth media content is sent to the session interface, so that an infinite switching can be performed with the second user based on the media content, and an interactive manner based on the media content is enriched.

FIG. 10 is a schematic structural diagram of an apparatus for displaying media content according to the embodiments of the present disclosure. As shown in FIG. 10, the apparatus comprises a displaying module 1001, a determining module 1002, and a switching module 1003. The displaying module 1001 is configured to display, within a session interface, at least one first media content sent by a second user in a predetermined first display state. The determining module 1002 is configured to, in response to a media content obtaining request triggered by a first user for the first media content, determine at least one second media content obtained by the first user. The switching module 1003 is configured to, in response to sending of the at least one second media content, switch a display state of the at least one of the first media content satisfying a predetermined condition, to a predetermined second display state.

Further, on the basis of any of the foregoing embodiments, the second media content comprises a media content. The determining module is configured to, in response to triggering by the first user on a predetermined media content obtaining control, obtain at least one media content generated by the first user. The media content obtaining control comprises at least one of: a media content capturing control, a media content uploading control, or a media content selecting control.

Further, on the basis of any of the foregoing embodiments, the determining module is configured to, in response to triggering by the first user on the media content capturing control, redirect to a predetermined media content capturing interface; and determine at least one media content generated by the first user on the media content capturing interface, as the at least one second media content.

Further, on the basis of any of the foregoing embodiments, the second media content comprises a media content satisfying a predetermined display condition. The determining module is configured to, in response to triggering by the first user on a predetermined media content obtaining control, display a media content list associated with a current application, the media content list including a plurality of media contents satisfying a predetermined display condition; and in response to selecting by the first user on the media content list, determine a media content selected by the first user, as the at least one second media content.

Further, on the basis of any of the foregoing embodiments, the media content satisfying the predetermined display condition comprises at least one of: a media content on which the first user has triggered a predetermined interaction, a media content historically posted by the first user, or a media content historically generated but unposted by the first user.

Further, on the basis of any of the foregoing embodiments, the determining module is configured to, in response to triggering by the first user on a predetermined media content obtaining control, display a predetermined upload selecting list, wherein the upload selecting list includes a selecting control; and in response to triggering by the first user on the selecting control, determine at least one image content and/or at least one video content generated by the first user, as the at least one second media content.

Further, on the basis of any of the foregoing embodiments, the selecting control comprises a first selecting control and a second selecting control. The determining module is configured to, in response to triggering by the first user on the first selecting control, determine the at least one image content generated by the first user, as the at least one second media content; and in response to triggering by the first user on the second selecting control, determine the at least one video content generated by the first user, as the at least one second media content.

Further, on the basis of any of the foregoing embodiments, the determining module is configured to, in response to the media content obtaining request triggered by the first user for the first media content, redirect to a media content generating interface, the media content generating interface comprising a predetermined random selecting control; and in response to triggering by the first user on the random selecting control, randomly select the at least one second media content.

Further, on the basis of any of the foregoing embodiments, the determining module is configured to, in response to the triggering by the first user on the random selecting control, randomly select at least one pre-stored media content, and determine the at least one pre-stored media content as the at least one second media content; and/or the determining module is configured to, in response to the triggering by the first user on the random selecting control, randomly select at least one media content satisfying a predetermined display condition, and determine the at least one media content satisfying the predetermined display condition, as the at least one second media content.

Further, on the basis of any of the foregoing embodiments, the determining module is configured to, in response to the triggering by the first user on the random selecting control, generate a dynamic display content according to a display content associated with a plurality of predetermined second media contents, the display content corresponding to a predetermined play duration; and play the dynamic display content, and displaying the randomly selected at least one second media content when the dynamic display content completes playing.

Further, on the basis of any of the foregoing embodiments, the switching module is configured to, in response to the sending of the at least one second media content, determine a time period escaped after the at least one first media content is sent; and switch a display state of the at least one of the first media content having the time period less than a predetermined duration threshold, to a predetermined second display state, according to the at least one second media content.

Further, on the basis of any of the foregoing embodiments, the apparatus further comprises the determining module configured to determine a time period escaped after the at least one first media content. The switching module is configured to in accordance with a determination, for each of the first media content, that the time period of the first media content exceeds a predetermined duration threshold, switch the display state of the first media content to a predetermined third display state. The third display state indicates that the display state of the first media content is unable to be switched to the predetermined second display state.

Further, on the basis of any of the foregoing embodiments, the switching module is configured to switch, within the session interface, the display state of n first media contents of the at least one first media content having the first display state and satisfying a predetermined switching condition, to the predetermined second display state, according to the at least one second media content, where n is greater than 1.

Further, on the basis of any of the foregoing embodiments, the n is associated with a number of second media contents.

Further, on the basis of any of the foregoing embodiments, the apparatus further comprises the displaying module configured to display, within the session interface, the at least one second media content; obtain at least one third media content sent by any second user based on the at least one second media content; and display a predetermined interactive control at a display location associated with the at least one second media content, the interactive control representing a number of second users having sent the at least one third media content based on the at least one second media content.

Further, on the basis of any of the foregoing embodiments, the apparatus further comprises the displaying module configured to, in response to triggering by the first user on the interactive control, display a second user list, the second user list including identification information of all of the second users having sent the third media content.

Further, on the basis of any of the foregoing embodiments, the apparatus further comprises the determining module configured to, in response to a media content obtaining request triggered by a first user, determine at least one fourth media content obtained by the first user. The sending module is configured to send the at least one fourth media content to the session interface, to enable the second user to send at least one target first media content based on the at least one fourth media content. The switching module is configured to, in response to the sending of the at least one second media content, switch a display state of the target first media content in a first display state, to the predetermined second display state, wherein the second media content is an interactive content generated based on the target first media content.

The apparatus provided in this embodiment may be configured to perform the technical solutions in the foregoing method embodiments, and implementation principles and technical effects thereof are similar, and details are not described herein again in this embodiment.

In order to implement the foregoing embodiments, the embodiments of the present disclosure further provide an electronic device, comprises: a processor and a memory.

The memory stores computer-executable instructions.

The processor executes the computer-executable instructions stored in the memory, causing the processor to perform the method of displaying media content according to any of the above embodiments.

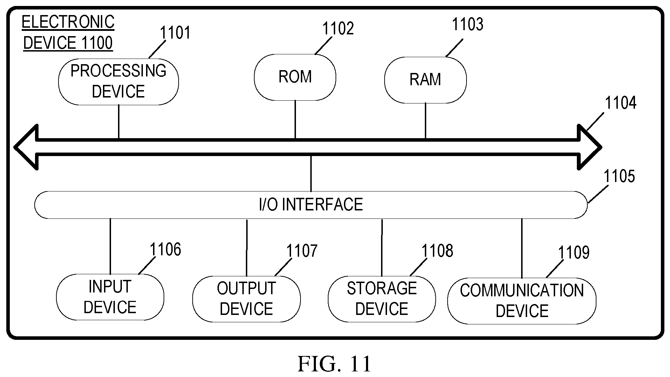

FIG. 11 is a schematic structural diagram of an electronic device according to the embodiments of the present disclosure. As shown in FIG. 11, an electronic device 1100 may be a terminal device or a server. The terminal device may comprise, but is not limited to, a mobile terminal such as a mobile phone, a notebook computer, a digital broadcast receiver, a personal digital assistant (PDA), a portable android device (PAD), a portable media player (PMP), an in-vehicle terminal (for example, an in-vehicle navigation terminal), and a fixed terminal such as a digital TV, a desktop computer, or the like. The electronic device shown in FIG. 11 is merely an example, and should not impose any limitation on the functions and scope of use of the embodiments of the present disclosure.

As shown in FIG. 11, the electronic device 1100 may comprises a processing device (for example, a central processing unit, a graphics processing unit, or the like) 1101, which may perform various appropriate actions and processing according to a program stored in a read only memory (ROM) 1102 or a program loaded into a random access memory (RAM) 1103 from a storage device 1108. In the RAM 1103, various programs and data required by the operation of the electronic device 1100 are also stored. The processing device 1101, the ROM 1102, and the RAM 1103 are connected to each other through a bus 1104. An Input/output (I/O) interface 1105 is also connected to the bus 1104.

Generally, the following devices may be connected to the I/O interface 1105: an input device 1106 including, for example, a touch screen, a touch pad, a keyboard, a mouse, a camera, a microphone, an accelerometer, a gyroscope, or the like; an output device 1107 including, for example, a liquid crystal display (LCD), a speaker, a vibrator, or the like; the storage device 1108 including, for example, a magnetic tape, a hard disk, or the like; and a communication device 1109. The communication device 1109 may allow the electronic device 1100 to communicate wirelessly or wired with other devices to exchange data. While FIG. 11 shows the electronic device 1100 having various devices, it should be understood that it is not required to implement or have all illustrated devices. More or fewer devices may alternatively be implemented or provided.

In particular, according to the embodiments of the present disclosure, the process described above with reference to the flowchart may be implemented as a computer software program. For example, the embodiments of the present disclosure comprise a computer program product comprising a computer program carried on a computer-readable medium, the computer program comprising program code for performing the method shown in the flowchart. In such embodiments, the computer program may be downloaded and installed from the network through the communication device 1109, or installed from the storage device 1108, or installed from the ROM 1102. When the computer program is executed by the processing device 1101, the foregoing functions defined in the method of the embodiments of the present disclosure are performed.

It should be noted that the computer-readable medium described above may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of computer-readable storage medium may include, but are not limited to, an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in connection with an instruction execution system, apparatus, or device. In the present disclosure, a computer-readable signal medium may include a data signal propagated in baseband or as part of a carrier, where the computer-readable program code is carried. Such a propagated data signal may take a variety of forms including, but not limited to, an electromagnetic signal, an optical signal, or any suitable combination thereof. The computer-readable signal medium may further be any computer-readable medium other than a computer-readable storage medium that may send, propagate, or transmit a program for use by or in connection with an instruction execution system, apparatus, or device. The program code contained in the computer-readable medium may be transmitted with any suitable medium, including, but not limited to: a wire, an optical cable, radio frequency (RF), or the like, or any suitable combination thereof.

The embodiments of the present disclosure further provide a computer-readable storage medium, the computer-executable instructions, when executed by the processor, implementing the method of displaying media content according to any of the foregoing embodiments.

The embodiments of the present disclosure further provide a computer program product comprising a computer program, the computer program, when executed by a processor, implementing the method of displaying media content according to any of the foregoing embodiments.

The computer-readable medium described above may be included in the electronic device; or may be separately exist without being assembled into the electronic device.

The computer-readable medium carries one or more programs, and when the one or more programs are executed by the electronic device, the electronic device is caused to perform the method shown in the foregoing embodiments.

Computer program code for performing the operations of the present disclosure may be written in one or more programming languages, including object-oriented programming languages, such as Java, Smalltalk, C++, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to a user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowcharts or block diagrams may represent a module, program segment, or a portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, and may sometimes be performed in a reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The modules involved in the embodiments of the present disclosure may be implemented in software, or may be implemented in hardware. The name of the module in some cases does not constitute a limitation on the module itself, for example, the first obtaining module may further be described as a "module for obtaining at least two Internet Protocol addresses".

The functions described herein may be performed, at least in part, by one or more hardware logic components. For example, without limitation, example types of hardware logic components that may be used include: a field programmable gate array (FPGA), an application specific integrated circuit (ASIC), an application specific standard product (ASSP), a system-on-a-chip (SOC), a complex programmable logic device (CPLD), or the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to a first aspect, a method of displaying media content is provided according to one or more embodiments of the present disclosure, comprising:
displaying, within a session interface, in a predetermined first display state, at least one first media content sent by a second user;
in response to a media content obtaining request triggered by a first user for the first media content, determining at least one second media content obtained by the first user; and
in response to sending of the at least one second media content, switching a display state of at least one of the first media content satisfying a predetermined condition, to a predetermined second display state.

According to one or more embodiments of the present disclosure, the second media content comprises a media content; and in response to the media content obtaining request triggered by the first user for the first media content, determining the at least one second media content obtained by the first user comprises:
in response to triggering by the first user on a predetermined media content obtaining control, obtaining at least one media content generated by the first user; and
wherein the media content obtaining control comprises at least one of: a media content capturing control, a media content uploading control, or a media content selecting control.

According to one or more embodiments of the present disclosure, in response to the triggering by the first user on the predetermined media content obtaining control, obtaining the at least one media content generated by the first user comprises:
in response to triggering by the first user on the media content capturing control, redirecting to a predetermined media content capturing interface; and
determining at least one media content generated by the first user on the media content capturing interface, as the at least one second media content.

According to one or more embodiments of the present disclosure, the second media content comprises a media content satisfying a predetermined display condition; and in response to the media content obtaining request triggered by the first user for the first media content, determining the at least one second media content obtained by the first user comprises:
in response to triggering by the first user on a predetermined media content obtaining control, displaying a media content list associated with a current application, the media content list including a plurality of media contents satisfying a predetermined display condition; and
in response to selecting by the first user on the media content list, determining a media content selected by the first user, as the at least one second media content.

According to one or more embodiments of the present disclosure, the media content satisfying the predetermined display condition comprises at least one of: a media content on which the first user has triggered a predetermined interaction, a media content historically posted by the first user, or a media content historically generated but unposted by the first user.

According to one or more embodiments of the present disclosure, in response to the media content obtaining request triggered by the first user for the first media content, determining the at least one second media content obtained by the first user comprises:
in response to triggering by the first user on a predetermined media content obtaining control, displaying a predetermined upload selecting list, wherein the upload selecting list includes a selecting control; and
in response to triggering by the first user on the selecting control, determining at least one image content and/or at least one video content generated by the first user, as the at least one second media content.

According to one or more embodiments of the present disclosure, the selecting control comprises a first selecting control and a second selecting control; and
in response to the triggering by the first user on the selecting control, determining the at least one image content and/or the at least one video content generated by the first user, as the at least one second media content comprises:
in response to triggering by the first user on the first selecting control, determining the at least one image content generated by the first user, as the at least one second media content; and
in response to triggering by the first user on the second selecting control, determining the at least one video content generated by the first user, as the at least one second media content.

According to one or more embodiments of the present disclosure, in response to the media content obtaining request triggered by the first user for the first media content, determining the at least one second media content obtained by the first user comprises:
in response to the media content obtaining request triggered by the first user for the first media content, redirecting to a media content generating interface, the media content generating interface comprising a predetermined random selecting control; and
in response to triggering by the first user on the random selecting control, randomly selecting the at least one second media content.

According to one or more embodiments of the present disclosure, in response to the triggering by the first user on the random selecting control, randomly selecting the at least one second media content comprises:
in response to the triggering by the first user on the random selecting control, randomly selecting at least one pre-stored media content, and determining the at least one pre-stored media content as the at least one second media content; and/or
wherein in response to the triggering by the first user on the random selecting control, randomly selecting the at least one second media content comprises:
   in response to the triggering by the first user on the random selecting control, randomly selecting at least one media content satisfying a predetermined display condition, and determining the at least one media content satisfying the predetermined display condition, as the at least one second media content.

According to one or more embodiments of the present disclosure, in response to the triggering by the first user on the random selecting control, randomly selecting the at least one second media content comprises:
in response to the triggering by the first user on the random selecting control, generating a dynamic display content according to a display content associated with a plurality of predetermined second media contents, the display content corresponding to a predetermined play duration; and
playing the dynamic display content, and displaying the randomly selected at least one second media content when the dynamic display content completes playing.

According to one or more embodiments of the present disclosure, in response to the sending of the at least one second media content, switching the display state of the at least one of the first media content satisfying the predetermined condition, to the predetermined second display state comprises:
in response to the sending of the at least one second media content, determining a time period escaped after the at least one first media content is sent; and
switching a display state of the at least one of the first media content having the time period less than a predetermined duration threshold, to a predetermined second display state, according to the at least one second media content.

According to one or more embodiments of the present disclosure, the method further comprises after displaying, within the session interface, in the predetermined first display state, the at least one first media content sent by the second user having a predetermined association with the first user:
determining a time period escaped after the at least one first media content; and
in accordance with a determination, for each of the first media content, that the time period of the first media content exceeds a predetermined duration threshold, switching the display state of the first media content to a predetermined third display state;
wherein the third display state indicates that the display state of the first media content is unable to be switched to the predetermined second display state.

According to one or more embodiments of the present disclosure, in response to the sending of the at least one second media content, switching the display state of the at least one of the first media content satisfying the predetermined condition, to the predetermined second display state comprises:
switching, within the session interface, the display state of n first media contents of the at least one first media content having the first display state and satisfying a predetermined switching condition, to the predetermined second display state, according to the at least one second media content, where n is greater than 1.

According to one or more embodiments of the present disclosure, the n is associated with a number of second media contents.

According to one or more embodiments of the present disclosure, the method further comprises after, in response to the sending of the at least one second media content, switching the display state of the at least one of the first media content satisfying the predetermined condition, to the predetermined second display state:
displaying, within the session interface, the at least one second media content;
obtaining at least one third media content sent by any second user based on the at least one second media content; and
displaying a predetermined interactive control at a display location associated with the at least one second media content, the interactive control representing a number of second users having sent the at least one third media content based on the at least one second media content.

According to one or more embodiments of the present disclosure, the method further comprises after displaying the predetermined interactive control at the display location associated with the at least one second media content:
in response to triggering by the first user on the interactive control, displaying a second user list, the second user list including identification information of all of the second users having sent the third media content.

According to one or more embodiments of the present disclosure, the method further comprises before displaying, within the session interface, the at least one first media content sent by the second user in the predetermined first display state:
in response to a media content obtaining request triggered by a first user, determining at least one fourth media content obtained by the first user;
sending the at least one fourth media content to the session interface, to enable the second user to send at least one target first media content based on the at least one fourth media content; and
wherein in response to the sending of the at least one second media content, switching the display state of the at least one of the first media content satisfying the predetermined condition to the predetermined second display state comprises:
   in response to the sending of the at least one second media content, switching a display state of the target first media content in a first display state, to the predetermined second display state, wherein the second media content is an interactive content generated based on the target first media content.

In a second aspect, according to one or more embodiments of the present disclosure, there is provided an apparatus for displaying media content, comprising:
a displaying module configured to display, within a session interface, at least one first media content sent by a second user in a predetermined first display state;
a determining module configured to, in response to a media content obtaining request triggered by a first user for the first media content, determine at least one second media content obtained by the first user; and
a switching module configured to, in response to sending of the at least one second media content, switch a display state of the at least one of the first media content satisfying a predetermined condition, to a predetermined second display state.

According to one or more embodiments of the present disclosure, the second media content comprises a media content. The determining module is configured to, in response to triggering by the first user on a predetermined media content obtaining control, obtain at least one media content generated by the first user. The media content obtaining control comprises at least one of: a media content capturing control, a media content uploading control, or a media content selecting control.

According to one or more embodiments of the present disclosure, the determining module is configured to, in response to triggering by the first user on the media content capturing control, redirect to a predetermined media content capturing interface; and determine at least one media content generated by the first user on the media content capturing interface, as the at least one second media content.

According to one or more embodiments of the present disclosure, the second media content comprises a media content satisfying a predetermined display condition. The determining module is configured to, in response to triggering by the first user on a predetermined media content obtaining control, display a media content list associated with a current application, the media content list including a plurality of media contents satisfying a predetermined display condition; and in response to selecting by the first user on the media content list, determine a media content selected by the first user, as the at least one second media content.

According to one or more embodiments of the present disclosure, the media content satisfying the predetermined display condition comprises at least one of: a media content on which the first user has triggered a predetermined interaction, a media content historically posted by the first user, or a media content historically generated but unposted by the first user.

According to one or more embodiments of the present disclosure, the selecting control comprises a first selecting control and a second selecting control. The determining module is configured to, in response to triggering by the first user on the first selecting control, determine the at least one image content generated by the first user, as the at least one second media content; and in response to triggering by the first user on the second selecting control, determine the at least one video content generated by the first user, as the at least one second media content.

According to one or more embodiments of the present disclosure, the determining module is configured to, in response to the media content obtaining request triggered by the first user for the first media content, redirect to a media content generating interface, the media content generating interface comprising a predetermined random selecting control; and in response to triggering by the first user on the random selecting control, randomly select the at least one second media content.

According to one or more embodiments of the present disclosure, the determining module is configured to, in response to the triggering by the first user on the random selecting control, randomly select at least one pre-stored media content, and determine the at least one pre-stored media content as the at least one second media content; and/or the determining module is configured to, in response to the triggering by the first user on the random selecting control, randomly select at least one media content satisfying a predetermined display condition, and determine the at least one media content satisfying the predetermined display condition, as the at least one second media content.

According to one or more embodiments of the present disclosure, the determining module is configured to, in response to the triggering by the first user on the random selecting control, generate a dynamic display content according to a display content associated with a plurality of predetermined second media contents, the display content corresponding to a predetermined play duration; and play the dynamic display content, and displaying the randomly selected at least one second media content when the dynamic display content completes playing.

According to one or more embodiments of the present disclosure, the switching module is configured to, in response to the sending of the at least one second media content, determine a time period escaped after the at least one first media content is sent; and switch a display state of the at least one of the first media content having the time period less than a predetermined duration threshold, to a predetermined second display state, according to the at least one second media content.

According to one or more embodiments of the present disclosure, the apparatus further comprises the determining module configured to determine a time period escaped after the at least one first media content. The switching module is configured to in accordance with a determination, for each of the first media content, that the time period of the first media content exceeds a predetermined duration threshold, switch the display state of the first media content to a predetermined third display state. The third display state indicates that the display state of the first media content is unable to be switched to the predetermined second display state.

According to one or more embodiments of the present disclosure, the switching module is configured to switch, within the session interface, the display state of n first media contents of the at least one first media content having the first display state and satisfying a predetermined switching condition, to the predetermined second display state, according to the at least one second media content, where n is greater than 1.

According to one or more embodiments of the present disclosure, the n is associated with a number of second media contents.

According to one or more embodiments of the present disclosure, the apparatus further comprises the displaying module configured to display, within the session interface, the at least one second media content; obtain at least one third media content sent by any second user based on the at least one second media content; and display a predetermined interactive control at a display location associated with the at least one second media content, the interactive control representing a number of second users having sent the at least one third media content based on the at least one second media content.

According to one or more embodiments of the present disclosure, the apparatus further comprises the displaying module configured to, in response to triggering by the first user on the interactive control, display a second user list, the second user list including identification information of all of the second users having sent the third media content.

According to one or more embodiments of the present disclosure, the apparatus further comprises the determining module configured to, in response to a media content obtaining request triggered by a first user, determine at least one fourth media content obtained by the first user. The sending module is configured to send the at least one fourth media content to the session interface, to enable the second user to send at least one target first media content based on the at least one fourth media content. The switching module is configured to, in response to the sending of the at least one second media content, switch a display state of the target first media content in a first display state, to the predetermined second display state, wherein the second media content is an interactive content generated based on the target first media content.

In a third aspect, there is provided an electronic device comprising:
a processor and a memory;
the memory storing computer-executable instructions;
the processor executing the computer-executable instructions stored in the memory, causing the processor to perform the method of displaying media content according to the first aspect and various possible designs of the first aspect.

In a fourth aspect, there is provided a computer-readable storage medium storing computer-executable instructions, the computer-executable instructions, when executed by the processor, implementing the method of displaying media content according to the first aspect and various possible designs of the first aspect.

In a fifth aspect, there is provided a computer program product comprising a computer program, the computer program, when executed by a processor, implementing the method of displaying media content according to the first aspect and various possible designs of the first aspect.

The above description is merely an illustration of the preferred embodiments of the present disclosure and the principles of the application. It should be understood by those skilled in the art that the protection scope in the present disclosure is not limited to the technical solutions of the specific combination of the above technical features, and should also cover other technical solutions formed by any combination of the above technical features or their equivalent features without departing from the above disclosed concept, for example, technical solutions formed by substituting the aforementioned features with technical features that have similar functions to those disclosed (but not limited to) in the present disclosure.

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Some features described in the context of separate embodiments may also be implemented in combination in a single embodiment. Conversely, the various features described in the context of a single embodiment may also be implemented in multiple embodiments individually or in any suitable sub-combination.

Although the present subject matter has been described in language specific to structural features and/or method logic acts, it is to be understood that the subject matter defined in the appended claims is not necessarily limited to the specific features or acts described above. Rather, the specific features and acts described above are merely example forms of implementing the claims.

## Claims

1. A method of displaying media content, comprising:
displaying, within a session interface, in a predetermined first display state, at least one first media content sent by a second user;
in response to a media content obtaining request triggered by a first user for the first media content, determining at least one second media content obtained by the first user; and
in response to sending of the at least one second media content, switching a display state of at least one of the first media content satisfying a predetermined condition, to a predetermined second display state.

2. The method of claim 1, wherein the second media content comprises a media content; and in response to the media content obtaining request triggered by the first user for the first media content, determining the at least one second media content obtained by the first user comprises:
in response to triggering by the first user on a predetermined media content obtaining control, obtaining at least one media content generated by the first user; and
wherein the media content obtaining control comprises at least one of: a media content capturing control, a media content uploading control, or a media content selecting control.

3. The method of claim 2, wherein in response to the triggering by the first user on the predetermined media content obtaining control, obtaining the at least one media content generated by the first user comprises:
in response to triggering by the first user on the media content capturing control, redirecting to a predetermined media content capturing interface; and
determining at least one media content generated by the first user on the media content capturing interface, as the at least one second media content.

4. The method of claim 1, wherein the second media content comprises a media content satisfying a predetermined display condition; and in response to the media content obtaining request triggered by the first user for the first media content, determining the at least one second media content obtained by the first user comprises:
in response to triggering by the first user on a predetermined media content obtaining control, displaying a media content list associated with a current application, the media content list including a plurality of media contents satisfying a predetermined display condition; and
in response to selecting by the first user on the media content list, determining a media content selected by the first user, as the at least one second media content.

5. The method of claim 4, wherein the media content satisfying the predetermined display condition comprises at least one of: a media content on which the first user has triggered a predetermined interaction, a media content historically posted by the first user, or a media content historically generated but unposted by the first user.

6. The method of claim 1, wherein in response to the media content obtaining request triggered by the first user for the first media content, determining the at least one second media content obtained by the first user comprises:
in response to triggering by the first user on a predetermined media content obtaining control, displaying a predetermined upload selecting list, wherein the upload selecting list includes a selecting control; and
in response to triggering by the first user on the selecting control, determining at least one image content and/or at least one video content generated by the first user, as the at least one second media content.

7. The method of claim 6, wherein the selecting control comprises a first selecting control and a second selecting control; and
in response to the triggering by the first user on the selecting control, determining the at least one image content and/or the at least one video content generated by the first user, as the at least one second media content comprises:
in response to triggering by the first user on the first selecting control, determining the at least one image content generated by the first user, as the at least one second media content; and
in response to triggering by the first user on the second selecting control, determining the at least one video content generated by the first user, as the at least one second media content.

8. The method of any of claims 1 to 7, wherein in response to the media content obtaining request triggered by the first user for the first media content, determining the at least one second media content obtained by the first user comprises:
in response to the media content obtaining request triggered by the first user for the first media content, redirecting to a media content generating interface, the media content generating interface comprising a predetermined random selecting control; and
in response to triggering by the first user on the random selecting control, randomly selecting the at least one second media content.

9. The method of claim 8, wherein in response to the triggering by the first user on the random selecting control, randomly selecting the at least one second media content comprises:
in response to the triggering by the first user on the random selecting control, randomly selecting at least one pre-stored media content, and determining the at least one pre-stored media content as the at least one second media content; and/or
wherein in response to the triggering by the first user on the random selecting control, randomly selecting the at least one second media content comprises:
in response to the triggering by the first user on the random selecting control, randomly selecting at least one media content satisfying a predetermined display condition, and determining the at least one media content satisfying the predetermined display condition, as the at least one second media content.

10. The method of claim 8, wherein in response to the triggering by the first user on the random selecting control, randomly selecting the at least one second media content comprises:
in response to the triggering by the first user on the random selecting control, generating a dynamic display content according to a display content associated with a plurality of predetermined second media contents, the display content corresponding to a predetermined play duration; and
playing the dynamic display content, and displaying the randomly selected at least one second media content when the dynamic display content completes playing.

11. The method of any of claims 1 to 7, wherein in response to the sending of the at least one second media content, switching the display state of the at least one of the first media content satisfying the predetermined condition, to the predetermined second display state comprises:
in response to the sending of the at least one second media content, determining a time period escaped after the at least one first media content is sent; and
switching a display state of the at least one of the first media content having the time period less than a predetermined duration threshold, to a predetermined second display state, according to the at least one second media content.

12. The method of any of claims 1 to 7, further comprising after displaying, within the session interface, in the predetermined first display state, the at least one first media content sent by the second user having a predetermined association with the first user:
determining a time period escaped after the at least one first media content; and
in accordance with a determination, for each of the first media content, that the time period of the first media content exceeds a predetermined duration threshold, switching the display state of the first media content to a predetermined third display state;
wherein the third display state indicates that the display state of the first media content is unable to be switched to the predetermined second display state.

13. The method of any of claims 1 to 7, wherein in response to the sending of the at least one second media content, switching the display state of the at least one of the first media content satisfying the predetermined condition, to the predetermined second display state comprises:
switching, within the session interface, the display state of n first media contents of the at least one first media content having the first display state and satisfying a predetermined switching condition, to the predetermined second display state, according to the at least one second media content, where n is greater than 1.

14. The method of claim 13, wherein the n is associated with a number of second media contents.

15. The method of any of claims 1 to 7, further comprising after, in response to the sending of the at least one second media content, switching the display state of the at least one of the first media content satisfying the predetermined condition, to the predetermined second display state:
displaying, within the session interface, the at least one second media content;
obtaining at least one third media content sent by any second user based on the at least one second media content; and
displaying a predetermined interactive control at a display location associated with the at least one second media content, the interactive control representing a number of second users having sent the at least one third media content based on the at least one second media content.

16. The method of claim 15, further comprising after displaying the predetermined interactive control at the display location associated with the at least one second media content:
in response to triggering by the first user on the interactive control, displaying a second user list, the second user list including identification information of all of the second users having sent the third media content.

17. The method of any of claims 1 to 7, further comprising before displaying, within the session interface, the at least one first media content sent by the second user in the predetermined first display state:
in response to a media content obtaining request triggered by a first user, determining at least one fourth media content obtained by the first user;
sending the at least one fourth media content to the session interface, to enable the second user to send at least one target first media content based on the at least one fourth media content; and
wherein in response to the sending of the at least one second media content, switching the display state of the at least one of the first media content satisfying the predetermined condition to the predetermined second display state comprises:
in response to the sending of the at least one second media content, switching a display state of the target first media content in a first display state, to the predetermined second display state, wherein the second media content is an interactive content generated based on the target first media content.

18. An apparatus for displaying media content, comprising:
a displaying module configured to display, within a session interface, at least one first media content sent by a second user in a predetermined first display state;
a determining module configured to, in response to a media content obtaining request triggered by a first user for the first media content, determine at least one second media content obtained by the first user; and
a switching module configured to, in response to sending of the at least one second media content, switch a display state of the at least one of the first media content satisfying a predetermined condition, to a predetermined second display state.

19. An electronic device comprising:
a processor and a memory;
the memory storing computer-executable instructions;
the processor executing the computer-executable instructions stored in the memory, causing the processor to perform the method of displaying media content according to any of claims 1 to 18.

20. A computer-readable storage medium storing computer-executable instructions, the computer-executable instructions, when executed by the processor, implementing the method of displaying media content according to any of claims 1 to 18.

21. A computer program product comprising a computer program, the computer program, when executed by a processor, implementing the method of displaying media content according to any of claims 1 to 18.
